# EUROPEAN PATENT APPLICATION

(11) **EP 3 041 100 A1**
(43) Date of publication of application: **06.07.2016**
(21) Application number: 16156414.1
(22) Date of filing: 21.09.2012
(51) Int. Cl.: H02G 15/18, H01R 13/518, H01R 13/52, H01R 43/00, H01R 4/70

(54) **ARRANGEMENT FOR SPLICING THE CABLES IN A MEDIUM-VOLTAGE OVERHEAD POWER LINE**

(30) Priority: 22.09.2011 FI 20115933
(62) Divisional of application: 12832957.0
(71) Applicant: Ensto Oy, 06100 Porvoo (FI)
(72) Inventor: AARNIO, Anssi, 06100 POrvoo (FI); BÄRLUND, Stefan, 06100 Porvoo (FI); EKHOLM, Patrick, 06100 Porvoo (FI); SALONEN, Mikko, 06100 Porvoo (FI); VANHALAKKA, Juha, 06100 Porvoo (FI); LEHTIKANGAS, Perttu, 06100 Porvoo (FI); PULKKINEN, Petteri, 06100 Porvoo (FI); VILENIUS, Veijo, 06100 Porvoo (FI); ALKILA, Kauko, 06100 Porvoo (FI)
(74) Representative: Papula Oy

(57) **Abstract**

The invention relates to a structural arrangement for splicing the covered cables (100) comprised by a medium voltage line, the cables in the medium voltage line comprising a cable insulator (104) to insulate said cables and the structural arrangement comprising a metallic splice part (114) whereinside the cables (100) to be spliced can be locked at the ends (122, 124), and formable pastes (118) extending from the ends for the splice part to enclose the ends of the cables (100). The structural arrangement comprises heat shrink tubing (116) enclosing, in a shrunk state, the splice part (114) for a substantially large area and cold shrink tubings (120) to enclose the ends of the splice part (114) and the pastes (118), the cold shrink tubings settling by shrinkage over a part of the heat shrink tubing, completely over the pastes (118) and over a part of the cable insulator (104).

## Description

### FIELD OF THE INVENTION

The importance of the reliability level in the distribution of electricity and valuation for the quality of electricity has significantly increased in the last years. Medium voltage lines are electricity transmission implementations used in medium voltage networks, where particular attention is paid to the insulation properties and usability.

### PRIOR ART

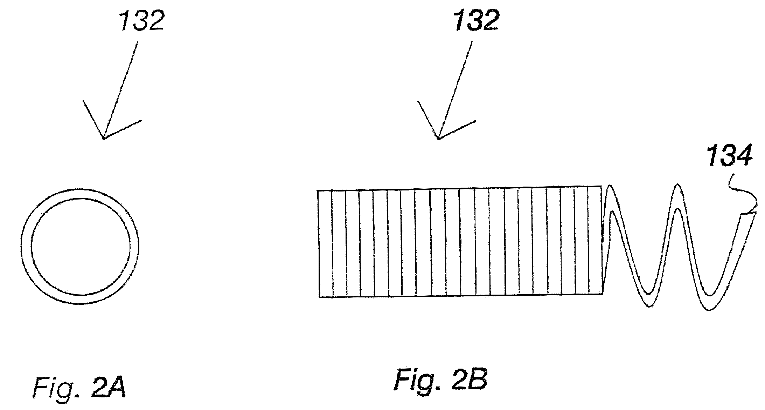

The basic structure of a medium voltage line comprises, at its core, a cable 100 (Fig. 2), a surrounding cable insulator layer 104 covered by the surface layer of the medium voltage line. The structure may also comprise for example a waterproofing layer where waterproofing tape stops any moisture penetrated into the line from progressing in the longitudinal direction, in order that any harmful effect of the moisture could be limited to as small an area as possible in the line.

The cables 100 in a medium voltage line are spliced, according to the prior art, at the ends stripped of the cover by using a so-called splice part to be insulated with the cable ends, most often by heat shrink tubing and more rarely by cold shrink tubing. Around the stripped part of the cable 100 at the ends of the splice part, a formable paste is used, such as clay paste, for example to improve the insulation properties in such critical points. The shrink tubing serving as the insulator should extend in length over the splice part up to the surface of the cover of the cable 100.

The problem in the prior art implementation is that making the joint under worksite conditions is difficult because the monolithic shrink tubing must be extended over the entire joint area, i.e. over the splice part up to the surface of the cover of the cable 100. In particular, using the most often used heat shrink tubing under varying installation worksite conditions is difficult, which leads to problems in achieving a sufficiently good waterproofing and electrical insulating capability.

### SHORT DESCRIPTION OF THE INVENTION

The objective of the invention is to carry out splicing of the cables in a medium voltage line in a practically simple and reliable manner under different installation conditions. This is achieved by a structural arrangement for splicing the covered cables comprised by a medium voltage line, the medium voltage line comprising a cable insulator to insulate said cables, and the structural arrangement comprising a metallic splice part whereinside the cables to be spliced can be locked at the ends, and formable pastes extending from the ends of the splice part to enclose the ends of the cables. The structural arrangement comprises heat shrink tubing enclosing, in a shrunk state, the splice part for a substantially large area, and cold shrink tubings to enclose the ends of the splice part and the pastes, the cold shrink tubings settling by shrinkage over a part of the heat shrink tubing, completely over the pastes and over a part of the cable insulator.

The invention also relates to a method for splicing the covered cables comprised by a medium voltage line, in which method said cables to be spliced in the medium voltage line are insulated by a cable insulator, and the cables to be spliced are locked into a metallic splice part at the ends, and the ends of the cables are enclosed by formable pastes which extend from the ends of the splice part and which are wrapped in tape. The splice part is enclosed by shrinkable heat shrink tubing and the ends of the splice part and the pastes are enclosed by cold shrink tubings in such a way that the cold shrink tubings settle by shrinkage over a part of the heat shrink tubing, completely over the pastes and over a part of the cable insulator.

The invention is based on an implementation where a combined structure formed by the heat shrink tubing and the cold shrink tubing with the splice part is utilized to splice a medium voltage cable in such a way that the heat shrink tubing is placed, i.e. shrunk, first on the splice part for example already in connection with the manufacture of the splice part. Then, in the actual situation of installing the wires in the medium voltage line, the cold shrink tubing is placed, i.e. shrunk, at least partially over the heat shrink tubing on top of the splice part and also partially over the medium voltage cable.

The advantage of the invention is that the medium voltage wires can be more readily spliced in connection with installation situations under worksite conditions, and the resulting splice structure in the wire is reliable, thus fulfilling for example the waterproofing requirements and requirements of electrical insulating capability required thereof. Furthermore, the present invention solves the problem of how the splice part can be reliably protected even before the work situation under controlled conditions. A common property of heat shrinks is susceptibility to breakage as the stretching wire is moving in comparison to the corresponding cold shrink. The solution according to the invention combines the better properties of heat and cold shrinks.

### LIST OF FIGURES

Fig. 1 illustrates a medium voltage cable and a structural arrangement according to a preferred embodiment of the invention for splicing the medium voltage cable.
Fig. 2A-2B illustrate a support spiral according to the invention provided between cold shrink tubing and paste.

### DETAILED DESCRIPTION OF THE INVENTION

The present invention provides a structural arrangement for splicing the covered cables 100 comprised by a medium voltage line. It may be applied for example to the covered medium voltage cables and longitudinally waterproof covered medium voltage cables. The medium voltage range can be defined as 0.6/1 (1.2)kV < UO/U (Um) < 26/45 (52)kV, where U0 is the nominal voltage between the cable and ground, U is the nominal voltage between phase conductors and Um is the allowable maximum voltage.

In one embodiment of the invention, the covered cable 100 is part of a medium voltage line designed as an overhead wire. Insulation requirements for an overhead wire are considerably lighter than those for the corresponding ground cable of a medium voltage line; on the other hand, mechanical strength, in particular tensile strength, required of an overhead wire and of the applicable joint is at a considerably higher level than for a ground cable.

In the implementation according to the invention, the ends of the cable to be spliced in a medium voltage line are first stripped of covers, whereafter the stripped ends are inserted into a splice part from the opposite ends of the splice part, and the stripped ends are wedged by pulling into wedges in the splice part, providing both mechanical locking and electrical contact. Such splice parts, i.e. splice pieces, are also commercially available and for example made of metallic material. A cable fastened by wedging enables good tensile strength for the joint. On the other hand, as a consequence of the wedge fastening, the surface of the splice part 114 is free of screw terminals or the like that should be turned, possibly causing the preinstalled heat shrink surface to break.

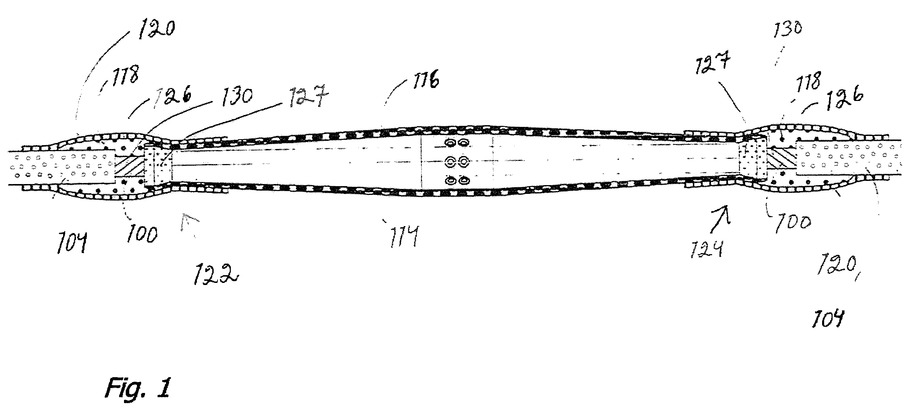

Fig. 1 illustrates a structural arrangement according to a preferred embodiment of the invention, wherein said cables are covered and insulated by a cable insulator 104. In overhead wires, the covering does not necessarily refer to the electrical insulation of the wire because, as compared to ground wires, the overhead wires have different mechanical requirements. The overhead wires are subject to great mechanical stresses, in particular tensile stress. On the other hand, good electrical insulating capability is the most important requirement for ground wires. The cable insulator 104 is designed to protect the cable 100 from external mechanical stress or moisture.

Each cable to be spliced is stripped at the ends 122, 124. The structural arrangement comprises for example a metallic splice part 114 whereinside the cable to be spliced can be locked by the ends. In a preferred embodiment, the metallic splice part 114 is covered by heat shrink tubing 116 so as to enclose the splice part in advance for example under fixed temperature conditions and fixed air humidity conditions by the manufacturer of the splice part. Under heating, the heat shrink tubing 116 shrinks, settling in its place over the splice part 114. By virtue of a wedged structure, the joint does not need to be reinforced later in a work situation for example by a screwed press joint. Thus, the heat shrink tubing preset over the splice part 114 remains undamaged in the work situation. The piece illustrated in Fig. 1 in the middle of the splice part 114 is for example a piece used in the manufacturing stage and joined by rivets.

The structural arrangement comprises formable pastes 118 extending from the ends 122, 124 of the splice part 114 to enclose the ends of the cables 100. Such pastes are used for example for insulating and/or sealing purposes. To prevent damaging of the pastes, tape 126 is wrapped therearound. The ends of the splice part and the pastes are enclosed by cold shrink tubings 120 in such a way that the cold shrink tubings cover a part of the heat shrink tubing, the paste 118 and a part of the cable insulator 104. The cold shrink tubings 120 are each threaded around the end of the respective cable to be spliced, preferably before fastening the cable to the splice part 114. Fig. 2A-2B illustrate an unwinding support spiral preferably used as a support structure 132 in the structural arrangement, disposed in the installation stage between the paste 118 and the cold shrink tubing 120 (Fig. 1). Fig. 2A illustrates the support spiral as viewed directly from the opening to the medium voltage cable, and Fig. 2B illustrates a side view of the support spiral. The support spiral 132 comprises a strip 134 pulled out to unwind the support spiral (Fig. 2B), and the cold shrink tubing 120 settles in its place by shrinkage.

In a preferred embodiment of the invention, a covered splice part 114, two pieces of formable paste 118, two pieces of tape 126 and two pieces of cold shrink tubings 120 constitute a package by which the splice part can be easily finished at the installation site. First, the cold shrinks 120 on the support spiral 132 are threaded onto the cables 100 to be spliced. In the next step, the stripped ends 122, 124 of the cables 100 are inserted and locked into the finished splice part 114 referred to by a pulling motion, which procedure is assisted by plastic guides 127. The combined pushing and pulling motion activates wedge-shaped fasteners inside the splice part 114, so that the ends 122, 124 of the cables become locked inside the splice part 114. The formable paste is then formed as a suitably thick layer around the stripped part 130 of each end 122, 124 of the cable immediately to extend from the end of the splice part 114. The paste 118 also extends for a distance, for example for 2cm to 3cm, onto the cable insulator 104. The paste 118 is then wrapped in tape 126 provided between the paste 118 and the cold shrink tubing 120 in order that, during installation, i.e. shrinkage, of the cold shrink tubing, the support spiral pulled from a strip 134 of the support spiral 132 between the cold shrink tubing and the paste would not pull out the paste. The tape 126 is for example PVC tape (polyvinyl chloride). As the support spiral is unwound by pulling the strip out from the support spiral, the cold shrink tubing settles in its place by shrinkage so as to cover the paste 118, a part of the heat shrink tubing 116 and for example 1cm to 3cm of the cable insulator 104. The walls of the shrink tubings 116, 120 have a thickness of for example between 1mm and 10mm, in a preferred embodiment between 2 to 5mm.

The quality and maximum voltage of the spliced cables in a medium voltage line according to a preferred embodiment of the invention can be successfully confirmed for example by voltage tests according to the currently effective standard.

Although the invention has been disclosed in the above description with reference to the figures, it is not limited to the description or the figures; instead, the invention may be modified within the limits defined by the accompanying claims.

## Claims

1. A structural arrangement for splicing the covered cables (100) comprised by a medium voltage line, the medium voltage line cables comprising a cable insulator (104) to insulate said cables and the structural arrangement comprising a metallic splice part (114) whereinside the cables (100) to be spliced can be locked at the ends (122, 124), and formable pastes (118) extending from the ends of the splice part to enclose the ends of the cables (100), **characterized in that** the structural arrangement comprises heat shrink tubing (116) enclosing, in a shrunk state, the splice part (114) for a substantially large area, and cold shrink tubings (120) to enclose the ends of the splice part (114) and the pastes (118), the cold shrink tubings settling by shrinkage over a part of the heat shrink tubing, completely over the pastes (118) and over a part of the cable insulator (104).

2. The structural arrangement according to claim 1, **characterized in that** the structural arrangement comprises heat shrink tubing (116) enclosing, in a shrunk state, the splice part (114) for a substantially large area, placed, i.e. shrunk, over the splice part before the actual work situation of splicing the wires of a medium voltage line.

3. The structural arrangement according to claim 1, **characterized in that** the structural arrangement comprises tape (126) between the paste (118) and the cold shrink tubing (120).

4. The structural arrangement according to claim 1, **characterized in that** the structural arrangement comprises a support structure (132) between the cold shrink tubing (120) and the paste (118) for positioning the cold shrink tubing in its place.

5. The structural arrangement according to claim 4, **characterized in that** the support structure (132) is an unwinding support spiral (132), comprising a strip (134) for unwinding the support spiral by pulling the strip out from the support spiral, whereupon the cold shrink tubing (120) settles in its place by shrinkage.

6. The structural arrangement according to claim 1, **characterized in that** the walls of the shrink tubings (116, 120) have a thickness of between 2mm to 5mm.

7. The structural arrangement according to claim 1, **characterized in that** the cables (100) are overhead cables.

8. A method for splicing the covered cables (100) comprised by a medium voltage line, in which method said cables to be spliced in the medium voltage line are insulated by a cable insulator (104), and the cables to be spliced are locked at the ends inside a metallic splice part (114) and the ends of the cables (100) are enclosed by formable pastes (118) extending from the ends of the splice part (114), **characterized in that** the splice part (114) is enclosed by shrinkable heat shrink tubing (116) and the ends of the splice part (114) and the pastes (118) are enclosed by cold shrink tubings in such a way that the cold shrink tubings settle by shrinkage over a part of the heat shrink tubing (116), completely over the pastes (118) and over a part of the cable insulator (104).

9. The method according to claim 8, **characterized in that** the splice part (114) is enclosed by the shrinkable heat shrink tubing (116) placed, i.e. shrunk, over the splice part before the actual work situation of splicing the wires of a medium voltage line.

10. The method according to claim 8, **characterized in that** taping is provided between the paste (118) and the cold shrink tubing (120) .

11. The method according to claim 8, **characterized in that** the cold shrink tubing (120) is positioned in its place by using a support structure (132) between the cold shrink tubing (120) and the paste (118).

12. The method according to claim 11, **characterized in that** the cold shrink tubing (120) is positioned in its place by using an unwinding support spiral (132) as the support structure, which is unwound by pulling a strip (134) out from the support spiral, whereupon the cold shrink tubing (120) settles in its place by shrinkage.

13. The method according to claim 8, **characterized in that** the walls of the shrink tubings (116, 120) used in the method have a thickness of between 2mm to 5mm.

14. The method according to claim 8, **characterized in that** the cables (100) are overhead cables.
